(19) Europäisches Patentamt
European Patent Office
Office européen des brevets

(11) EP 2 202 210 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**01.07.2020 Patentblatt 2020/27**

(45) Hinweis auf die Patenterteilung:
**10.01.2018 Patentblatt 2018/02**

(21) Anmeldenummer: **09176427.4**

(22) Anmeldetag: **19.11.2009**

(51) Int Cl.:
***C04B 26/02*** (2006.01)
***C04B 28/02*** (2006.01)
***C04B 40/00*** (2006.01)
*C04B 111/27* (2006.01)
*C04B 111/54* (2006.01)

(54) **Hydrophobierte zementhaltige Zusammensetzungen**

Hydrophobic cementitious composition

Compositions hydrophobes comprenant du ciment

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.12.2008 DE 102008063965**

(43) Veröffentlichungstag der Anmeldung:
**30.06.2010 Patentblatt 2010/26**

(73) Patentinhaber: **Evonik Operations GmbH**
**45128 Essen (DE)**

(72) Erfinder:
- **Weyershausen, Bernd**
  **45289, Essen (DE)**
- **Stadtmüller, Stefan**
  **45481, Mülheim an der Ruhr (DE)**
- **Roos, Markus**
  **45289, Essen (DE)**
- **Koenig, Frank**
  **45884, Gelsenkirchen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 065 431**
**EP-A2- 0 476 452**
**EP-A2- 0 476 452**
**EP-A2- 0 908 498**
**WO-A1-2008/062018**
**DE-A1- 4 114 498**
**US-B1- 6 294 608**

EP 2 202 210 B2

## Beschreibung

Die Erfindung betrifft neuartige hydrophobierte zementhaltige Zusammensetzungen und ein Verfahren zu deren Herstellung.

Zementartige Materialien und Kompositionen wie z. B. Kleber, Beton sowie daraus herstellbare Baustoffe, Betonfertigteile und Betonwaren wie z.B. Röhren, Wandsegmente oder Pflastersteine, werden häufig in Wände, in Fußböden, in Dächer und in dergleichen eingesetzt bzw. zu deren Herstellung verwendet. Die zementartigen Materialien werden dabei häufig Wasser ausgesetzt, welches da diese Materialien in der Regel porös sind, in diese eindringen kann. Durch die Verwendung von geeigneten Zuschlagsstoffen bzw. Additiven und damit herstellbaren Formulierungen kann diese inhärente Porosität im größeren Umfang verringert werden. Eine vollständige Vermeidung der Porosität lässt sich üblicherweise aber nicht erreichen. Es wird deshalb von einer gesamten Industrie nach Methoden gesucht, die es ermöglichen, die genannten Materialien wasserabweisend zu machen und damit gegenüber Wasser zu schützen. Dabei haben sich zwei Methoden als vielversprechend erwiesen, eine interne und eine externe. Die interne Methode besteht darin, einer flüssigen auf Zement als Bindemittel basierenden Mischung vor der Härtung eine hydrophobierende - wasserabweisende - Substanz bzw. eine reaktive Substanz, die nach erfolgter Reaktion bzw. Aushärtung einen gewissen wasserabweisenden Effekt bewirkt, zuzufügen. Kommerziell erfolgreich wurden dazu als Substanzen bisher vorzugsweise Fettsäure-basierende Materialien, insbesondere Stearate und Oleate eingesetzt. Zum Erreichen von guten hydrophobierenden (wasserabweisenden) Effekten ist allerdings die Zugabe größerer Mengen dieser Substanzen notwendig, weshalb ein merklicher Einfluss dieser Substanzen auf die anderen Materialeigenschaften der gehärteten zementbasierten Materialien nicht ausgeschlossen werden kann.

Ein solche Veränderung der anderen Materialgenschaften kann im Wesentlichen ausgeschlossen werden, wenn externe Methoden zur Hydrophobierung verwendet werden. Bei diesen Methoden werden die Substanzen auf die gehärteten zementbasierten Materialien aufgebracht. Üblicherweise werden niedrigviskose Substanzen oder auch Pasten eingesetzt, deren Aktivstoffe in die Poren eindringen können, wie z. B. siliziumorganische Verbindungen. Diese können z. B. in Form von wässrigen Emulsionen eingesetzt werden. Sie können aber auch im Gemisch mit anderen Lösungsmitteln oder sogar direkt eingesetzt werden, wenn die Organosiliziummaterialien in sich selbst genug flüssig sind. Um einen ausreichenden wasserabweisenden Effekt zu erzielen, sind häufig mehrfache Behandlungen der zementbasierten Materialien notwendig. Dies und die nachträgliche Behandlung der gehärteten Materialien macht die externe Methode relativ aufwändig.

Es ist vorgeschlagen worden, Organosiliziummaterialien als Beimischungen zementbasierten Mischungen hinzuzufügen, um die guten hydrophobierenden Eigenschaften dieser Substanzen auf den Oberflächen bei nachträglicher externer Imprägnierung mit dem Vorteil des einfachen Gebrauchs der Stearate und Oleate zu kombinieren. Die Organosiliziummaterialien sind dabei in Form von wässrigen Emulsionen hydrolysierbarer Siliziumwasserstoffverbindungen eingesetzt worden.

In WO 02/090287 wurde diese Methode dahingehend weiterentwickelt, dass einer flüssigen zementbasierten Mischung, eine wässrige Emulsion eines Organosiliziummaterials zugegeben wird, die 0,25 bis 4,5 Gew.-% an Alkoxysilanen und 0,1 bis 2,0 Gew.-% an Alkoxysiloxanen aufweist. Der Anteil an Emulsion an der zementhaltigen Zusammensetzung beträgt dabei von 0,1 bis 2 %. Der maximale Anteil an siliziumorganischen Verbindungen in der zementhaltigen Mischung beträgt damit 6,5 % x 2 % = 0,13 Gew.-%. Der maximale Anteil an siliziumorganischen Verbindungen in der zementhaltigen Mischung beträgt damit 0,35 % x 0,1 % = 0,00035 Gew.-%. Gemäß dem Beispiel C wird eine Emulsion, die 30 % Feststoffanteil aufweist, durch Zugabe von 9 Teilen Wasser verdünnt. Diese verdünnte Emulsion wird mit einem Anteil von 1,1 Gew.-% bezogen auf den Zementanteil in Beispiel C eingesetzt. Somit beträgt der Anteil der siliziumorganischen Verbindungen an der zementhaltigen Zusammensetzung 0,033 Gew.-%. EP 0476452 A2 offenbart Imprägnierungen von fertigen Baustoffen durch Tauchen.

US 6,294,608 B1 offenbart zementhaltige Zusammensetzungen mit einer hohen Konzentration an Alkoxysilanen und Alkoxysiloxanen. Neben den Schädigungen an Bauwerken sowie Baustoffmassen beziehungsweise Produkten daraus durch eindringendes Wasser, wie z. B. Schädigungen durch Frost, sowie Auslaugen, Aussalzen und Abplatzen durch die Bildung von Salz mit Hydratwasser, die in der Regel durch den Einsatz von insbesondere externen Hydrophobierungsmitteln unterbunden werden, kann es an verschiedenen Werkstoffen des Bauwesens, z. B. Sichtbeton, Betonwerksteinen oder Ziegeln auch zu sogenannten Ausblühungen kommen.

Ausblüherscheinungen auf den Werkstoffoberflächen können neben der rein ästhetischen Beeinträchtigung des optischen Gesamtbildes, z. B. bei Betonpflastersteinen oder Gebäudefassaden, auch zu Einschränkungen bei den Werkstoffeigenschaften, wie z. B. zu einer Verschlechterung der Wärmedämmeigenschaften oder einer Abnahme der mechanischen Festigkeit aufgrund der Auslaugung von Bindemittel führen.

Unter sekundärem Ausblühen versteht man den Effekt, dass durch eindringendes Wasser Salze gelöst werden und diese durch kapillaren Transport an die Oberfläche gelangen, wo sie nach Verdunsten des Wassers als Salzrückstand verbleiben. Diesen Effekt kann man durch eine nachträgliche Hydrophobierung unterbinden.

Ausblühungen treten aber auch schon bei der Herstellung von zement-gebundenen Systemen auf, was durch

eine nachträglich durchgeführte Hydrophobierung nicht unterbunden werden kann. Ausblühen, das bei der Herstellung auftritt, wird üblicherweise als primäres Ausblühen bezeichnet. Das primäre Ausblühen ist vermutlich darauf zurückzuführen, dass sich vorhandenes Calciumhydroxid an der Werkstoffoberfläche mit dem Kohlendioxid aus der Luft in unlösliches Calciumcarbonat umwandelt.

Ausgehend von diesem Stand der Technik bestand die Aufgabe der vorliegenden Erfindung darin, ein verbessertes Verfahren zur Hydrophobierung von zementbasierten/zementhaltigen Materialien bereitzustellen. Insbesondere sollte der Effekt des Ausblühens (sekundär und ggf. primär) verhindert werden. Unter primärem Ausblühen soll die Bildung/Ablagerung von Salzkristallen bzw. salzartigen Kristallen an der Oberfläche von zementbasierten/zementhaltigen Materialien bei der Herstellung, insbesondere der Aushärtung der Materialien verstanden werden. Das Entstehen von solchen primären Ausblühungen kann, wie oben ausgeführt, zur Schädigung des Materials führen.

Überraschenderweise wurde gefunden, dass zementhaltige Zusammensetzungen gemäß Anspruch 1 deutlich bessere wasserabweisende Eigenschaften aufweisen, als die im Stand der Technik beschriebenen zementbasierten Zusammensetzungen. Gegenstand der vorliegenden Erfindung sind deshalb zementhaltige Zusammensetzungen gemäß Anspruch 1.

Ebenfalls Gegenstand der vorliegenden Erfindung ist ein Verfahren gemäß Anspruch 7.

Das erfindungsgemäße Verfahren hat den Vorteil, dass auf eine aufwändige nachträgliche Hydrophobierung der zementhaltigen Zusammensetzung verzichtet werden kann. Die erfindungsgemäßen zementhaltigen Zusammensetzungen haben den Vorteil, dass deren Wasserundurchlässigkeit gegenüber den im Stand der Technik beschriebenen Zusammensetzungen verbessert ist. Die erfindungsgemäßen Zusammensetzungen weisen außerdem den Vorteil auf, dass das Auftreten von Ausblühungen vermindert wird. Insbesondere weisen die erfindungsgemäßen Zusammensetzungen den Vorteil auf, dass das Auftreten von primären Ausblühungen vermindert bzw. verhindert wird.

Die erfindungsgemäßen Zusammensetzungen sowie ein Verfahren zu deren Herstellung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z. B. organomodifizierte Polysiloxane, beschrieben, die verschiedene Einheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als Mittelwert, gemittelt über alle entsprechenden Verbindungen zu verstehen.

Unter dem Zementanteil wird vorzugsweise die Summe aller Verbindungen, ausgewählt aus Ca0, $SiO_2$, $Al_2O_3$, $Fe_2O_3$ und $CaSO_4$, deren Mischkristalle, wie z. B. Aluminiumsilikate, Ferrosilikate o.ä. sowie den entsprechenden Kristallwasser enthaltenen Verbindungen, verstanden.

Die erfindungsgemäßen zementhaltigen Zusammensetzungen zeichnen sich dadurch aus, dass sie einen Anteil an siliziumorganischen Verbindungen von 0,3 bis 1 Gew.-% bezogen auf den Zementanteil aufweisen, wobei die siliziumorganischen Verbindungen auf mindestens einer siliziumorganischen Verbindung ausgewählt aus der Gruppe der Alkoxysilane und mindestens einer ausgewählt aus der Gruppe Alkoxysiloxane basieren, und dass von den siliziumorganischen Verbindungen 5 bis 95 Gew.-% auf Alkoxysilanen der allgemeinen Formel (**I**)

$$R^1\text{-Si-}(OR^2)_3 \qquad (\mathbf{I})$$

wobei

$R^1$ ein Alkylrest mit 1 bis 16, vorzugsweise 3 bis 12 Kohlenstoffatomen und
$R^2$ ein Alkylrest mit 1 bis 4 Kohlenstoffatomen, vorzugsweise ein Methyl- oder Ethylrest ist, und
95 bis 5 Gew.-% auf einer Mischung, bestehend aus

d1) einem Silan der allgemeinen Formel (**III**)

$$R^6\text{-Si-}(OR^5)_3 \qquad (\mathbf{III})$$

wobei

$R^5$ ein Alkylrest mit 1 bis 4 Kohlenstoffatomen, vorzugsweise ein Methyl- oder Ethylrest ist, und
$R^6$ ein Aminoalkylrest mit 1 bis 6 Kohlenstoffatomen,

ein Rest der allgemeinen Formel (**IV**)

$H_2N-(CH_2)_xR^7-(CH_2)_y-$ (**IV**),

in der

$R^7$ einen -O-, -S-, -NH- oder $-NH-CH_2-CH_2-NH-$Rest,
x größer-gleich 2 und
y größer-gleich 2 bedeutet, oder ein Rest der allgemeinen Formel (**V**)

$(R^8O)_3Si-(CH_2)_z-NH-(CH_2)_z-$ (**V**),

in der $R^8$ ein Alkylrest mit 1 bis 4 Kohlenstoffatomen, vorzugsweise ein Methyl- oder Ethylrest und z größer-gleich 2 bedeutet,

und

d2) einem Polysiloxan der allgemeinen Formel (**VIII**)

$HO-[Si(R^9)_2O]_m-H$ (**VIII**)

basieren,
wobei
$R^9$ gleich oder verschieden ein Methyl- oder Phenylrest ist, jedoch mindestens 90 % der Reste $R^9$ Methylreste sind und m = 20 bis 250 ist, und wobei das Verhältnis von d1) zu d2) so gehalten ist, dass einer SiOH-Gruppe der Verbindung d2) > 1 bis 3 $OR^5$-Gruppen der Verbindung d1) entsprechen.

Bevorzugte Zusammensetzungen sind solche, bei denen bis zu 50 Gew.-% der Komponente d) durch gleiche Mengen eines Siloxans der Formel

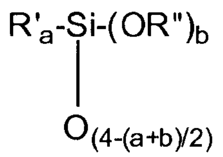

mit R' = Alkylrest mit 1 bis 8 Kohlenstoffatomen oder ein Phenylrest, R" = ein Alkylrest mit 1 bis 4 Kohlenstoffatomen, a = 0,8 bis 1,2 und b = 0,2 bis 1,2, ersetzt sind.

Es kann vorteilhaft sein, wenn in der erfindungsgemäßen Zusammensetzung die siliziumorganischen Verbindungen zumindest eine Verbindung ausgewählt aus der Gruppe der Alkoxysilane und zumindest einer Verbindung ausgewählt aus der Gruppe der Alkoxysiloxane sind (und nicht nur auf solchen basieren). Dies hat den Vorteil, dass solche Verbindungen einfach herzustellen sind.

In einer weiteren vorteilhaften Ausführungsform der erfindungsgemäßen Zusammensetzung werden die siliziumorganischen Verbindungen durch Umsetzung zumindest einer Verbindung ausgewählt aus der Gruppe der Alkoxysilane und zumindest einer Verbindung ausgewählt aus der Gruppe der Alkoxysiloxane erhalten. Durch den Einsatz solcher siliziumorganischen Verbindungen, die durch Umsetzung erhalten werden, können diese besonders gut auf die anderen Bestandteile der Zusammensetzung abgestimmt werden.

Die Umsetzung kann bei unterschiedlichen Temperaturen und Drücken durchgeführt werden. Vorzugsweise erfolgt die Umsetzung bei einer Temperatur von 150 bis 200 °C.

Die bei der Umsetzung eingesetzten Mengen an Alkoxysiloxanen und Alkoxysilanen können über einen weiten Bereich variiert werden. Vorzugsweise beträgt das stöchiometrische Verhältnis von Alkoxysiloxanen zu Alkoxysilanen von 1 zu 1000 bis 1000 zu 1. Bevorzugt wird die Umsetzung in stöchiometrischen Mengen durchgeführt.

Die Umsetzung kann vollständig oder nur teilweise erfolgen. Vorzugsweise erfolgt die Umsetzung vollständig.

Die erfindungsgemäße Zusammensetzung kann z. B. Beton oder ein künstlicher Stein sein. Dieser Beton bzw. diese Steine können Bestandteil eines größeren architektonischen Bauwerks, wie z. B. eines Hauses, einer Mauer, einer Brücke oder ähnliches sein. Die erfindungsgemäße Zusammensetzung kann deshalb zur Herstellung von Bauwerken, insbesondere Dächern, Böden, Wänden oder anderen Elementen von Bauwerken, verwendet werden. Gegenstände der vorliegenden Erfindung sind dementsprechend auch architektonische Bauwerke oder Teile davon, wie z. B. eines Hauses, einer Mauer, einer Brücke oder ähnliches, z. B. Dächer, Böden, Wände oder ähnliches, die unter Verwendung erfindungsgemäßer Zusammensetzungen erhalten wurden bzw. die erfindungsgemäßen Zusammensetzungen enthalten oder daraus bestehen.

Handelt es sich bei der Zusammensetzung um einen Beton, kann dieser ein feuchter (wet), trockener (dry) oder semi-trockener (semi-dry) Beton sein. Ein Beton wird als feucht bezeichnet, wenn er ein Gewichtsverhältnis von Wasser zu Zement von größer 0,5 aufweist. Ein Beton wird als semitrocken bezeichnet, wenn er ein Gewichtsverhältnis von Wasser zu Zement von 0,4 bis 0,5 aufweist. Ein Beton wird als trocken bezeichnet, wenn er ein Gewichtsverhältnis von Wasser zu Zement von 0,3 bis kleiner 0,4 aufweist. Vorzugsweise ist die erfindungsgemäße Zusammensetzung ein semi-trockener Beton.

Die erfindungsgemäßen zementhaltigen Zusammensetzungen können auf unterschiedliche Weise durch Mischen der Einzelkomponenten erhalten werden. Vorzugsweise werden erfindungsgemäße zementhaltige Zusammensetzungen durch das nachfolgend beschriebene Verfahren erhalten.

Das erfindungsgemäße Verfahren zur Herstellung von gehärteten zementhaltigen Zusammensetzungen, durch Zugabe einer wässrigen Emulsion, die mindestens eine siliziumorganische Verbindung aufweist, die auf zumindest einer Verbindung ausgewählt aus der Gruppe der Alkoxysilane und mindestens einer Verbindung ausgewählt aus der Gruppe der Alkoxysiloxane basieren, zu einer zementhaltigen, fließfähigen Mischung und abschließendes Aushärten der Mischung, zeichnet sich dadurch aus, dass der Mischung soviel Emulsion zugegeben wird, dass der Anteil der siliziumorganischen Verbindungen an der zementhaltigen Zusammensetzung von 0,3 bis 1 Gew. -% bezogen auf den Zementanteil beträgt, und dass solche Emulsionen eingesetzt werden, die siliziumorganische Verbindungen aufweisen, die auf 5 bis 95 Gew.-% Alkoxysilanen der allgemeinen Formel (**I**)

$$R^1\text{-Si-}(OR^2)_3 \qquad \textbf{(I)}$$

wobei

$R^1$ ein Alkylrest mit 1 bis 16, vorzugsweise 3 bis 12 Kohlenstoffatomen und
$R^2$ ein Alkylrest mit 1 bis 4 Kohlenstoffatomen, vorzugsweise ein Methyl- oder Ethylrest ist, und
95 bis 5 Gew.-% einer Mischung, bestehend aus

d1) einem Silan der allgemeinen Formel (**III**)

$$R^{6}\text{-Si-}(OR^5)_3 \qquad \textbf{(III)}$$

wobei

$R^5$ ein Alkylrest mit 1 bis 4 Kohlenstoffatomen, vorzugsweise ein Methyl- oder Ethylrest ist, und
$R^6$ ein Aminoalkylrest mit 1 bis 6 Kohlenstoffatomen,

ein Rest der allgemeinen Formel (**IV**)

$$H_2N\text{-}(CH_2)_xR^7(CH_2)_y\text{-} \qquad \textbf{(IV)},$$

in der

$R^7$ einen -O-, -S-, -NH- oder $-NH-CH_2-CH_2-NH-$Rest, x größer-gleich 2 und
y größer-gleich 2 bedeutet, oder ein Rest der allgemeinen Formel (**V**)

$$(R^8O)_3Si\text{-}(CH_2)_z\text{-NH-}(CH2)_z\text{-} \qquad \textbf{(V)},$$

in der,

$R^8$ ein Alkylrest mit 1 bis 4 Kohlenstoffatomen, vorzugsweise ein Methyl- oder Ethylrest und
z größer-gleich 2 bedeutet,

d2) einem Polysiloxan der allgemeinen Formel (**VIII**)

$$HO\text{-}[Si(R^9)_2O]_m\text{-H} \qquad \textbf{(VIII)}$$

basieren,

wobei $R^9$ gleich oder verschieden ein Methyl- oder Phenylrest ist, jedoch mindestens 90 % der Reste $R^9$ Methylreste sind und m = 20 bis 250 ist, und wobei das Verhältnis von d1) zu d2) so gehalten ist, dass einer SiOH-Gruppe der Verbindung d2) > 1 bis 3 $OR^5$-Gruppen der Verbindung d1) entsprechen.

Vorzugsweise weist die der Mischung zugegebene Emulsion einen Anteil an siliziumorganischen Verbindungen an der Emulsion von 0,35 bis 6,5 Gew.-% auf.

Der Mischung wird vorzugsweise > 2 Gew.-%, vorzugsweise von 3 bis 77 Gew.-%, bevorzugt von 4 bis 7,7 Gew.-% an wässriger Emulsion zugegeben.

Es kann vorteilhaft sein, wenn in dem erfindungsgemäßen Verfahren eine Emulsion eingesetzt wird, die vorzugsweise von 1 bis 10 Massen-%, bevorzugt von 3 bis 5 Massen-% eines oder mehrerer Emulgatoren, ausgewählt aus anionischen, kationischen, nichtionogenen Emulgatoren oder Mischungen davon aufweist. Wird der bevorzugte Anteil an Emulgatoren überschritten, kann dies zu einer Verschlechterung der Hydrophobie des Betons oder künstlichen Steins führen. Vorzugsweise wird eine Emulsion eingesetzt, die nichtionogene Emulgatoren, d. h. Anlagerungsprodukte von Alkylenoxiden, vorzugsweise Ethylenoxid, an Verbindungen mit aktivem Wasserstoff, wie Fettalkohole, Alkylphenole, wie Octylphenol, Nonylphenol oder Dodecylphenol, aufweist. Der Gehalt an Oxyethyleneinheiten sollte vorzugsweise so groß sein, dass der HLB-Wert der Emulgatoren von 6 bis 20, bevorzugt 10 bis 18 beträgt.

Es kann vorteilhaft sein, wenn siliziumorganische Verbindungen eingesetzt werden, bei denen bis zu 50 Gew.-% der Komponente d) durch gleiche Mengen eines Siloxans der Formel **IX**

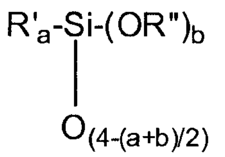

(**IX**)

mit R' = Alkylrest mit 1 bis 8 Kohlenstoffatomen oder ein Phenylrest, R" = ein Alkylrest mit 1 bis 4 Kohlenstoffatomen, a = 0,8 bis 1,2 und b = 0,2 bis 1,2, ersetzt werden.

Die Herstellung der erfindungsgemäßen Emulsion kann in der Weise erfolgen, dass die Bestandteile getrennt emulgiert werden oder eine Mischung der Bestandteile gemeinsam emulgiert wird. Dabei wird vorzugsweise der Emulgator der zu emulgierenden Komponente (oder zu deren Gemisch) zugegeben und das emulgatorhaltige Gemisch gegebenenfalls erwärmt. Zu dieser Mischung wird dann unter gutem Rühren das Wasser zugegeben. Die entstehende oder entstandene Emulsion kann mittels geeigneten Rührvorrichtungen, die vorzugsweise nach dem Rotor/Stator-Prinzip arbeiten, homogenisiert werden. Es kann vorteilhaft sein, Kolloidmühlen zur Verminderung der Teilchengröße der emulgierten Phase zu verwenden.

Die in dem erfindungsgemäßen Verfahren eingesetzten siliziumorganischen Verbindungen können durch Umsetzung zumindest einer Verbindung ausgewählt aus der Gruppe der Alkoxysilane und zumindest einer Verbindung ausgewählt aus der Gruppe der Alkoxysiloxane erhalten werden. Die Umsetzung kann wie oben beschrieben erfolgen.

Das abschließende Aushärten kann an Luft erfolgen, wobei ggf. ein Zuführen von zusätzlichem Wasser zur vollständigen Hydratation notwendig sein kann.

Die vorliegende Erfindung wird durch die Figur 1 näher erläutert, ohne dass die Erfindung darauf beschränkt sein soll.

In Fig. 1 ist graphisch die Abhängigkeit der Wasseraufnahme von dem Anteil der siliziumorganischen Verbindung dargestellt. Üblicherweise wird bei der Hydrophobierung eine Reduktion der Wasseraufnahme um mehr als 70 % als gut bezeichnet. Wie der Fig. 1 zu entnehmen ist, wird eine Reduktion der Wasseraufnahme um mehr als 70 % erst bei Zusatz von größer 0,1 Massen-% an siliziumorganischen Verbindungen erreicht.

In Fig. 2 sind Photographien der Prüfkörper gemäß Beispiel 8.0 nach einer Versuchsdauer gem. Beispiel 9 von einer Stunde (1h), 24 Stunden (24h), einer Woche (1W) und zwei Wochen (2W) wiedergegeben.

In Fig. 3 sind Photographien der Prüfkörper gemäß Beispiel 8.1c nach einer Versuchsdauer gem. Beispiel 9 von einer Stunde (1h), 24 Stunden (24h), einer Woche (1W) und zwei Wochen (2W) wiedergegeben.

In Fig. 4 sind Photographien der Prüfkörper gemäß Beispiel 8.2c nach einer Versuchsdauer gem. Beispiel 9 von einer Stunde (1h), 24 Stunden (24h), einer Woche (1W) und zwei Wochen (2W) wiedergegeben.

In Fig. 5 sind Photographien der Prüfkörper gemäß Beispiel 8.3c nach einer Versuchsdauer gem. Beispiel 9 von einer Stunde (1h), 24 Stunden (24h), einer Woche (1W) und zwei Wochen (2W) wiedergegeben.

In Fig. 6 sind Photographien der Prüfkörper gemäß Beispiel 8.4c nach einer Versuchsdauer gem. Beispiel 9 von einer Stunde (1h), 24 Stunden (24h), einer Woche (1W) und zwei Wochen (2W) wiedergegeben.

Der Gegenstand der vorliegenden Erfindung wird nachfolgend an Hand von Beispielen näher erläutert, ohne dass der Schutzbereich der Erfindung, der sich aus der Beschreibung und den Patentansprüchen ergibt, auf diese beispielhaften Ausführungsformen beschränkt sein soll.

## Beispiele

### Beispiel 1: Herstellung einer erfindungsgemäß einzusetzenden Emulsion

6,86 g gamma-Aminopropyltriethoxysilan (Dynasylan® AMEO, Evonik Degussa GmbH) wurden mit 93,14 g eines Polysiloxandiols (OH-Gruppen endständig) mit einem mittleren Molgewicht (Gewichtsmittel) von 4000 (g/mol) vermischt. Hieraus ergab sich ein Molverhältnis von Polysiloxandiol : Aminoalkylsilan = 3 : 4. Der Mischung wurden 150 g Octyltriethoxysilan zugegeben.

25 g eines Emulgatorgemisches, bestehend aus einem ethoxylierten Triglycerid mit einem HLB-Wert von 18 und einem ethoxylierten Fettalkohol mit einem HLB-Wert von 11 im Gewichtsverhältnis von 6 : 4, wurden in 225 g Wasser gelöst. In diese Lösung wurde das Silan-/Siloxan-Gemisch gerührt und mittels einer Emulgiermaschine (Spalthomogenisator) zu einer stabilen Emulsion verarbeitet.

### Beispiel 2: Herstellung einer erfindungsgemäß einzusetzenden Emulsion

Ein Gemisch aus 100 g Polysiloxandiol eines Molgewichtes von 6803 (g/mol) und 32,5 g gamma-Aminopropyltriethoxysilan (Dynasylan® AMEO, Evonik Degussa GmbH) wurde unter Rühren und Durchleiten von Stickstoff auf 180 °C erwärmt und etwa 4 Stunden bei dieser Temperatur gehalten, bis 8,8 g Ethanol ausgetrieben worden waren. Das entstandene Produkt wurde anschließend auf Raumtemperatur abgekühlt.

125 g dieses Produktes wurden mit 125 g Isobutyltrimethoxysilan gemischt. Die Zubereitung wurde mit 20 g eines Emulgatorgemisches, bestehend aus einem ethoxylierten Alkylphenol und einem Methylpolyoxyethylen(15)cocoammoniumchlorid im Gewichtsverhältnis 1 : 1, versetzt und nach Zugabe von 355 g Wasser mit einem nach dem Rotor-/Stator-Prinzip arbeitenden Gerät zu einer Emulsion verarbeitet.

### Beispiel 3: Herstellung einer nicht erfindungsgemäß einzusetzenden Emulsion

3200 g Polysiloxandiol mit einem mittleren Molgewicht von 10666 g/mol und 94,4 g 3-Glycidyloxypropyltrimethoxysilan (Dynasylan® GLYMO, Evonik Degussa GmbH) wurden miteinander vermischt. Unter Rühren und Durchleiten von Stickstoff wurde diese Mischung auf 170 °C erwärmt. Nach ca. 5 Stunden waren 11,5 g Methanol ausgetrieben. Das entstandene Umsetzungsprodukt wurde danach gekühlt auf Raumtemperatur (23 °C) abgekühlt.

25 g eines Emulgatorgemisches, bestehend aus einem ethoxylierten Fettalkohol und einem Alkylarylsulfonat in einem Mengenverhältnis von 3 : 7, wurden in 225 g Wasser gelöst. Diese Lösung wurde mit 140 g des oben erhaltenen Umsetzungsproduktes und 110 g n-Propyltriethoxysilan gemischt. Die erhaltene grobe Emulsion wurde dreimal durch einen Spalthomogenisator gepumpt. Es entstand eine stabile Emulsion.

### Beispiel 4: Herstellung einer erfindungsgemäß einzusetzenden Emulsion

5,15 g gamma-Aminopropyltriethoxysilan (Dynasylan® AMEO, Evonik Degussa GmbH) wurden mit 69,85 g Polysiloxandiol mit einem Molgewicht von 4000 und 25 g eines Siloxans der allgemeinen Formel (**X**)

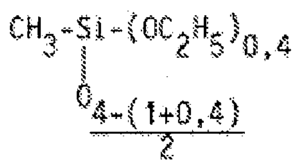

(**X**)

vermischt. Der Mischung wurden 150 g Octyltriethoxysilan zugegeben.

25 g eines Emulgatorgemisches, bestehend aus einem Triglycerid mit einem HLB-Wert von 18 und einem ethoxylierten Fettalkohol mit einem HLB-Wert von 11 im Gewichtsverhältnis von 6 : 4, wurden in 225 g Wasser gelöst. Die Lösung wurde in das Silan-/Siloxan-Gemisch gerührt und mittels einer Emulgiermaschine (Spalthomogenisator) zu einer stabilen Emulsion verarbeitet.

**Beispiel 5**

3,43 g gamma-Aminopropyltriethoxysilan wurden mit 46,57 g eines Polysiloxandiols mit einem Molgewicht von 4000 und 50 g eines Siloxans der allgemeinen Formel (**XI**)

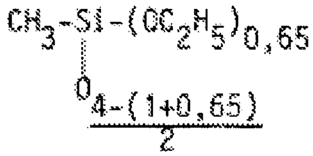

(**XI**)

vermischt. Der Mischung wurden 150 g Octyltriethoxysilan zugegeben.

25 g eines Emulgatorgemisches, bestehend aus einem Triglycerid mit einem HLB-Wert von 18 und einem ethoxylierten Fettalkohol mit einem HLB-Wert von 11 im Gewichtsverhältnis von 6 : 4, wurden in 225 g Wasser gelöst. Die Lösung wurde in das Silan-/Siloxan-Gemisch gerührt und mittels einer Emulgiermaschine (Spalthomogenisator) zu einer stabilen Emulsion verarbeitet.

**Anwendungstechnische Prüfungen**

**Beispiel 6: Herstellung von Prüfkörpern**

Die Emulsionen wurden zur Herstellung einer zementösen Mischung verwendet. Dazu wurden die in den nachfolgenden Beispielen angegebenen Mengen an Emulsion und Zementbestandteilen miteinander in einem Betonmischer gemischt. Das Massenverhältnis von Sand zu Zement betrug 3 zu 1. Das Gewichtsverhältnis von Wasser zu Zement betrug 0,4. Als Zement wurde Normzement CEM I 42,5 R eingesetzt.

Aus dieser Zusammensetzung wurden künstliche Steine mit einer Höhe von 50 mm, Breite von 50 mm und Länge von 160 mm als Prüfkörper gegossen. Nach 28-tägigem Trocknen bei Normklima (23 °C, 50 % rel. Luftfeuchtigkeit) im Klimaschrank wurde die Wasseraufnahmefähigkeit wie nachfolgend beschrieben bestimmt.

**Beispiel 7: Bestimmung der Wasseraufnahme**

Nach einer Bestimmung des Gewichts des jeweiligen Prüfkörpers wurde dieser 24 Stunden unter Wasser gelagert. Die überstehende Wassersäule betrug dabei 5 cm. Nach dem Herausnehmen wurde das äußerlich anhaftende Wasser mit Filterpapier entfernt. Die Prüfkörper wurden erneut gewogen. Die Wasseraufnahme errechnet sich nach folgender Formel:

$$\text{Wasseraufnahme (Massen-\%)} = (a-b) * 100/b,$$

wobei a das Gewicht des Prüfkörpers nach Wasserlagerung und b das Gewicht des Prüfkörpers vor Wasserlagerung ist.

Es wurden gemäß Beispiel 6 Prüfkörper hergestellt, die soviel einer Emulsion gemäß Beispiel 1 aufwiesen, dass der Gehalt an siliziumorganischen Verbindungen bezogen auf den Zementanteil 0, 0,1, 0,2, 0,3, 0,4 und 0,5 Massen-% betrug.

Das Ergebnis der Bestimmung der Wasseraufnahme kann Tabelle 1 entnommen werden.

Tabelle 1: Ergebnisse des Beispiels 7

| Gehalt Si-org. Verbindungen (Massen-%) | Wasseraufnahme (Massen-%) |
|---|---|
| 0 | 7,8 |
| 0,1 | 4,4 |
| 0,2 | 2,4 |
| 0,3 | 1,8 |
| 0,4 | 1,1 |
| 0,5 | 0,9 |

In Fig. 1 ist das Ergebnis graphisch aufgetragen. Es ist deutlich zu erkennen, dass erst ab einem Gehalt an siliziumorganischen Verbindungen von mehr als 0,1 Massen-% die gewünschte Reduzierung der Wasseraufnahme von 70 % oder mehr erreicht wird.

**Beispiel 8: Bestimmung der kapillaren Wasseraufnahme**

Das Verfahren dient zur Bestimmung der Wasseraufnahme von Baustoffen, die durch kapillare oder absorptive Kräfte entstehen. Die flächenbezogene Wasseraufnahme wird ohne nennenswerten Überdruck durch Oberflächenbenetzung in Anlehnung an DIN 52617 ermittelt.

Material und Reagenzien

Die Probekörper wurden auf das Format 50 mm X 50 mm X 50 mm geschnitten.
Laborwaage (0,1g - Anzeige)
Tauchbehälter mit Kunstoffgitter
Wasserbad mit Wasser gesättigtem Polyurethanweichschaum (25-30 g/l Raumgewicht)
Tiegelzange
Stoppuhr

Die wie in Beispiel 6 hergestellten Prüfkörper wurden nach dem verkleinern auf das oben genannte Format auf dem mit Wasser gesättigten Polyurethanweichschaum gelagert. Die Proben pressen durch ihr Eigengewicht Wasser aus dem Schaumstoff, so dass ein ständiger Kontakt der aufliegenden Fläche mit dem Wasser gewährleistet ist.

Durch Wägen nach 1h, 4h, 9h und 25h wurde die Wasseraufnahme in g/m$^2$ verfolgt. Vor jeder Wägung wurde oberflächlich anhaftendes Wasser mit einem saugfähigen Papiertuch abgetropft. Eine ausreichend gute Hydrophobierung liegt vor, wenn eine Reduzierung der Wasseraufnahme bezogen auf den Blindwert um größer-gleich 70 % erreicht wird.

Eingesetzt wurden Prüfkörper, die durch Verwendung der in Tabelle 2 genannten Zusammensetzungen gemäß Beispiel 6 hergestellt wurden. In der Tabelle bedeutet:

Rheopel: Rheopel® Plus, BASF SE, Silan basiertes Hydrophobierungsmittel.
CSD: Nopcote® CSD, eine 50 %-ige Calziumstearat-Dispersion, erhältlich bei GEO Specialty Chemicals.
IE6694: Mit Wasser verdünnbares, silikonhaltiges Mittel zur wasserabweisenden Ausrüstung von porösen Konstruktionsmaterialen der Dow Corning®.

Tabelle 2: Zusammensetzung der Prüfkörper für Beispiel 8

| Beispiel | Hydrophobierungmittel | Massenanteil bezogen auf den Zementanteil |
|---|---|---|
| 8,0 | keins | 0 |
| 8.1a | Gem. Beispiel 1 | 0,2 |
| 8.1b | Gem. Beispiel 1 | 0,4 |
| 8.1c | Gem. Beispiel 1 | 0,8 |
| 8.1d | Gem. Beispiel 1 | 1,66 |
| 8.2a | Rheopel | 0,2 |
| 8.2b | Rheopel | 0,4 |
| 8.2c | Rheopel | 0,8 |
| 8.2d | Rheopel | 1,66 |
| 8.3a | CSD | 0,2 |
| 8.3b | CSD | 0,4 |
| 8.3c | CSD | 0,8 |
| 8.3d | CSD | 1,66 |
| 8.4a | IE 6694 | 0,2 |

(fortgesetzt)

| Beispiel | Hydrophobierungmittel | Massenanteil bezogen auf den Zementanteil |
|---|---|---|
| 8.4b | IE 6694 | 0,4 |
| 8.4c | IE 6694 | 0,8 |
| 8.4d | IE 6694 | 1,66 |

Die Ergebnisse der kapillaren Wasseraufnahme in Abhängigkeit von der Zeit sind in Tabelle 3 zusammengestellt.

Tabelle 3: Ergebnisse der Bestimmung der kapillaren Wasseraufnahme (nach 0,5, 1, 2, 4, 9 und 25 Stunden)

| Beispiel | 0,5 h | 1 h | 2 h | 4 h | 9 h | 25 h |
|---|---|---|---|---|---|---|
| 8,0 | 304,7 | 421,9 | 585,9 | 867,2 | 1156,3 | 1562,5 |
| 8.1a | 23,4 | 39,1 | 78,1 | 140,6 | 234,4 | 429,7 |
| 8.1b | 0,0 | 0,0 | 23,4 | 85,9 | 164,1 | 335,9 |
| 8.1c | 0,0 | 7,8 | 39,1 | 85,9 | 148,4 | 265,6 |
| 8.1d | 0,0 | 15,6 | 54,7 | 101,6 | 148,4 | 257,8 |
| 8.2a | 62,5 | 101,6 | 148,4 | 242,2 | 351,6 | 585,9 |
| 8.2b | 70,3 | 117,2 | 148,4 | 218,7 | 289,1 | 484,4 |
| 8.2c | 39,1 | 70,3 | 93,8 | 156,3 | 218,7 | 375,0 |
| 8.2d | 15,6 | 46,9 | 85,9 | 140,6 | 195,3 | 320,3 |
| 8.3a | 398,4 | 500,0 | 601,6 | 750,0 | 890,6 | 1148,4 |
| 8.3b | 414,1 | 507,8 | 617,2 | 734,4 | 851,6 | 1062,5 |
| 8.3c | 304,7 | 351,6 | 437,5 | 531,2 | 570,3 | 718,7 |
| 8.3d | 210,9 | 289,1 | 343,8 | 437,5 | 562,5 | 593,8 |
| 8.4a | 195,3 | 281,3 | 382,8 | 546,9 | 718,8 | 992,2 |
| 8.4b | 70,3 | 117,2 | 187,5 | 296,9 | 375,0 | 554,7 |
| 8.4c | 101,6 | 132,8 | 195,3 | 273,4 | 351,6 | 507,8 |
| 8.4d | 54,7 | 101,6 | 117,2 | 164,1 | 218,7 | 351,6 |

Die Ergebnisse zeigen eindeutig, dass erfindungsgemäße Zusammensetzungen eine deutlich geringer kapillare Wasseraufnahme zeigen als die bisher bekannten Zusammensetzungen.

**Beispiel 9: Optische Bestimmung des Neigung zur Ausbildung von Ausblühungen**

Mit Prüfkörpern gemäß den Beispielen 8.0, 8.1c, 8.2c, 8.3c und 8.4c der Tabelle 8, hergestellt wie in Beispiel 6 und 8 beschrieben, wurden Untersuchungen zum Auftreten von Ausblühungen durchgeführt. Dazu wurden die Steine für bis zu 2 Wochen in einer 10 Massen-%igen, wässrigen Natriumsulfatlösung gelagert, wobei die Lösung an der Oberseite des Probekörpers ca. 3 mm überstand. Geprüft wird ob die Natriumsulfatlösung eindringt und an der Oberfläche nach dem Trocknen Salzabscheidungen hinterlässt.

In den Figuren 2 bis 6 sind Photographien der Prüfkörper nach einer Versuchsdauer von einer Stunde (1h), 24 Stunden (24h), einer Woche (1W) und zwei Wochen (2W) wiedergegeben. Es ist klar zu erkennen, dass der Einsatz der erfindungsgemäßen Zusammensetzungen (Fig. 3) zu einem ausgezeichneten Ausblühverhalten der Prüfkörper führen.

**Patentansprüche**

1. Zementhaltige Zusammensetzung, **dadurch gekennzeichnet, dass** die Zusammensetzung einen Anteil an siliziumorganischen Verbindungen von 0,3 bis 1 Gew.-% bezogen auf den Zementanteil aufweist, wobei die siliziumorganischen Verbindungen auf mindestens einer siliziumorganischen Verbindung ausgewählt aus der Gruppe der Alkoxysilane und mindestens einer ausgewählt aus der Gruppe Alkoxysiloxane basieren,
**dadurch gekennzeichnet, dass** von den siliziumorganischen Verbindungen

c) 5 bis 95 Gew.-% auf Alkoxysilanen der allgemeinen Formel (**I**)

$R^1$-Si-$(OR^2)_3$ (**I**)

wobei

$R^1$ ein Alkylrest mit 1 bis 16 Kohlenstoffatomen und
$R^2$ ein Alkylrest mit 1 bis 4 Kohlenstoffatomen ist,

und
d) 95 bis 5 Gew.-% auf einer Mischung, bestehend aus

d1) einem Silan der allgemeinen Formel (**III**)

$R^{6-}$Si-$(OR^5)_3$ (**III**)

wobei

$R^5$ ein Alkylrest mit 1 bis 4 Kohlenstoffatomen ist, und
$R^6$ ein Aminoalkylrest mit 1 bis 6 Kohlenstoffatomen,

ein Rest der allgemeinen Formel (**IV**)

$H_2N$- $(CH_2)_{<}R^{7-}$ $(CH_2)_{y}$- (**IV**),

in der

$R^7$ einen -O-, -S-, -NH- oder -NH-$CH_2$-$CH_2$-NH-Rest,
x größer-gleich 2 und
y größer-gleich 2 bedeutet, oder ein Rest der allgemeinen Formel (**V**)

$(R^8O)_3$Si- $(CH_2)_z$-NH- $(CH2)_z$- (**V**),

in der,

$R^8$ ein Alkylrest mit 1 bis 4 Kohlenstoffatomen und
z größer-gleich 2 bedeutet,

und

d2) einem Polysiloxan der allgemeinen Formel **(VIII)**

HO-$[Si(R^9)_2O]_m$-H ) (**VIII**

basieren, wobei
$R^9$ gleich oder verschieden ein Methyl- oder Phenylrest ist, jedoch mindestens 90 % der Reste $R^9$ Methylreste sind und m = 20 bis 250 ist, und wobei das Verhältnis von d1) zu d2) so gehalten ist, dass einer SiOH-Gruppe der Verbindung d2) > 1 bis 3 $OR^5$-Gruppen der Verbindung d1) entsprechen.

2. Zusammensetzung nach Anspruch 1, **dadurch gekennzeichnet, dass** bis zu 50 Gew.-% der Komponente d durch

gleiche Mengen eines Siloxans der Formel

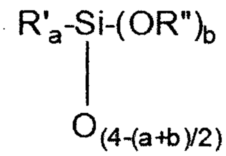

mit R' = Alkylrest mit 1 bis 8 Kohlenstoffatomen oder ein Phenylrest, R" = ein Alkylrest mit 1 bis 4 Kohlenstoffatomen, a = 0,8 bis 1,2 und b = 0,2 bis 1,2, ersetzt sind.

3. Zusammensetzung nach zumindest einem der Ansprüche 1 bis 2, **dadurch gekennzeichnet, dass** die siliziumorganischen Verbindungen zumindest eine Verbindung ausgewählt aus der Gruppe der Alkoxysilane und zumindest eine Verbindung ausgewählt aus der Gruppe der Alkoxysiloxane sind.

4. Zusammensetzung nach zumindest einem der Ansprüche 1 bis 3, **dadurch gekennzeichnet, dass** die siliziumorganischen Verbindungen durch Umsetzung zumindest einer Verbindung ausgewählt aus der Gruppe der Alkoxysilane und zumindest einer Verbindung ausgewählt aus der Gruppe der Alkoxysiloxane erhalten werden.

5. Zusammensetzung nach Anspruch 4, **dadurch gekennzeichnet, dass** die Umsetzung bei einer Temperatur von 150 bis 200 °C durchgeführt wird.

6. Zusammensetzung gemäß einem der Ansprüche 1 bis 5, **dadurch gekennzeichnet, dass** die Zusammensetzung Beton oder ein künstlicher Stein ist.

7. Verfahren zur Herstellung einer gehärteten zementhaltigen Zusammensetzung, durch Zugabe einer wässrigen Emulsion, die siliziumorganische Verbindungen aufweist, die auf zumindest einer Verbindung ausgewählt aus der Gruppe der Alkoxysilane und mindestens einer Verbindung ausgewählt aus der Gruppe der Alkoxysiloxane basieren, zu einer zementhaltigen, fließfähigen Mischung und abschließendes Härten der Mischung, **dadurch gekennzeichnet, dass** der Mischung soviel Emulsion zugegeben wird, dass der Anteil der siliziumorganischen Verbindungen an der zementhaltigen Zusammensetzung von 0,3 bis 1 Gew.-% bezogen auf den Zementanteil beträgt, **dadurch gekennzeichnet, dass** die siliziumorganischen Verbindungen auf

c) 5 bis 95 Gew.-% Alkoxysilanen der allgemeinen Formel (**I**)

$$R^1\text{-Si-}(OR^2)_3 \qquad (\mathbf{I})$$

wobei

$R^1$ ein Alkylrest mit 1 bis 16 Kohlenstoffatomen und
$R^2$ ein Alkylrest mit 1 bis 4 Kohlenstoffatomen ist,

und
d) 95 bis 5 Gew.-% einer Mischung, bestehend aus

d1) einem Silan der allgemeinen Formel (**III**)

$$R^6\text{-Si-}(OR^5)_3 \qquad (\mathbf{III})$$

wobei

$R^5$ ein Alkylrest mit 1 bis 4 Kohlenstoffatomen ist, und
$R^6$ ein Aminoalkylrest mit 1 bis 6 Kohlenstoffatomen,

ein Rest der allgemeinen Formel (**IV**)

$$H_2N\text{-}(CH_2)_x R^7\text{-}(CH_2)_y\text{-} \qquad (\mathbf{IV}),$$

in der

$R^7$ einen -O-, -S-, -NH- oder -NH-$CH_2$-$CH_2$-NH-Rest,
x größer-gleich 2 und
y größer-gleich 2 bedeutet, oder ein Rest der allgemeinen Formel (**V**)

$$(R^8O)_3Si\text{-}(CH_2)_z\text{-}NH\text{-}(CH2)_z\text{-} \qquad (\mathbf{V}),$$

in der,

$R^3$ ein Alkylrest mit 1 bis 4 Kohlenstoffatomen und
z größer-gleich 2 bedeutet,

und

d2) einem Polysiloxan der allgemeinen Formel (**VIII**)

$$HO\text{-}[Si(R^9)_2O]_m\text{-}H \qquad (\mathbf{VIII})$$

basieren, wobei
$R^9$ gleich oder verschieden ein Methyl- oder Phenylrest ist, jedoch mindestens 90 % der Reste $R^9$ Methylreste sind und m = 20 bis 250 ist, und wobei das Verhältnis von d1) zu d2) so gehalten ist, dass einer SiOH-Gruppe der Verbindung d2) > 1 bis 3 $OR^5$-Gruppen der Verbindung d1) entsprechen.

**8.** Verfahren nach Anspruch 7, **dadurch gekennzeichnet, dass** bis zu 50 Gew.-% der Komponente d) durch gleiche Mengen eines Siloxans der Formel

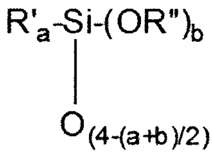

mit R' = Alkylrest mit 1 bis 8 Kohlenstoffatomen oder ein Phenylrest, R" = ein Alkylrest mit 1 bis 4 Kohlenstoffatomen, a = 0,8 bis 1,2 und b = 0,2 bis 1,2, ersetzt werden.

**9.** Verfahren nach Anspruch 7 oder 8, **dadurch gekennzeichnet, dass** die der Mischung zugegebene Emulsion einen Anteil an siliziumorganischen Verbindungen an der Emulsion von 1 bis 75 Gew.-% aufweist.

**10.** Verfahren nach zumindest einem der Ansprüche 7 bis 9, **dadurch gekennzeichnet, dass** der Mischung größer 2 Gew.-% an wässriger Emulsion zugegeben wird.

**11.** Verfahren nach zumindest einem der Ansprüche 7 bis 10, **dadurch gekennzeichnet, dass** eine Emulsion eingesetzt wird, die 1 bis 10 Massen-% eines oder mehrerer Emulgatoren ausgewählt aus anionischen, kationischen, nichtionogenen Emulgatoren oder Mischungen aufweist.

**12.** Verfahren nach zumindest einem der Ansprüche 7 bis 11, **dadurch gekennzeichnet, dass** die siliziumorganischen Verbindungen durch Umsetzung zumindest einer Verbindung ausgewählt aus der Gruppe der Alkoxysilane und zumindest einer Verbindung ausgewählt aus der Gruppe der Alkoxysiloxane erhalten werden.

**13.** Verfahren nach Anspruch 12, **dadurch gekennzeichnet, dass** die Umsetzung bei einer Temperatur von 150 bis 200 °C durchgeführt wird.

**14.** Verwendung einer Zusammensetzung gemäß einem der Ansprüche 1 bis 6 zur Herstellung von Bauwerken, insbesondere Dächern, Böden oder Wänden von Bauwerken.

**15.** Bauwerke oder Teile davon, die eine Zusammensetzung gemäß einem der Ansprüche 1 bis 6 enthalten oder daraus bestehen.

## Claims

1. Cement-containing composition, **characterized in that** the composition comprises a proportion of organosilicon compounds of 0.3 to 1% by weight, based on the proportion of cement, wherein the organosilicon compounds are based on at least one organosilicon compound selected from the group of alkoxysilanes and at least one selected from the group of alkoxysiloxanes,
**characterized in that** of the organosilicon compounds

c) 5 to 95% by weight are based on alkoxysilanes of the general formula (**I**)

$$R^1\text{-Si-}(OR^2)_3 \qquad \textbf{(I)}$$

wherein

$R^1$ is an alkyl radical having 1 to 16 carbon atoms and
$R^2$ is an alkyl radical having 1 to 4 carbon atoms,

and
d) 95 to 5% by weight are based on a mixture consisting of

d1) a silane of the general formula (**III**)

$$R^6\text{-Si-}(OR^5)_3 \qquad \textbf{(III)}$$

wherein

$R^5$ is an alkyl radical having 1 to 4 carbon atoms, and
$R^6$ is an aminoalkyl radical having 1 to 6 carbon atoms,

a radical of the general formula (**IV**)

$$H_2N\text{-}(CH_2)_x R^7\text{-}(CH_2)_y\text{-} \qquad \textbf{(IV)},$$

in which

$R^7$ is an -O-, -S-, -NH- or $-NH-CH_2-CH_2-NH-$ radical,
x is greater than or equal to 2 and
y is greater than or equal to 2, or a radical of the general formula (**V**)

$$(R^8O)_3Si\text{-}(CH_2)_z\text{-NH-}(CH_2)_z\text{-} \qquad \textbf{(V)},$$

in which

$R^8$ is an alkyl radical having 1 to 4 carbon atoms and
z is greater than or equal to 2,

and

d2) a polysiloxane of the general formula (**VIII**)

$$HO\text{-}[Si(R^9)_2O]_m\text{-H} \qquad \textbf{(VIII)},$$

wherein
$R^9$ is the same or different and is a methyl or phenyl radical, but at least 90% of the $R^9$ radicals are methyl radicals and m = 20 to 250, and wherein the ratio of d1) to d2) is maintained such that one SiOH group of the compound d2) corresponds to > 1 to 3 $OR^5$ groups of the compound d1).

2. Composition according to Claim 1, **characterized in that** up to 50% by weight of component d is replaced by equal

amounts of a siloxane of the formula

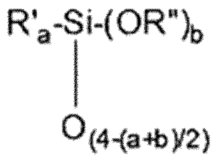

where R' = alkyl radical having 1 to 8 carbon atoms or a phenyl radical, R" = an alkyl radical having 1 to 4 carbon atoms, a = 0.8 to 1.2 and b = 0.2 to 1.2.

3. Composition according to at least one of Claims 1 to 2, **characterized in that** the organosilicon compounds are at least one compound selected from the group of alkoxysilanes and at least one compound selected from the group of alkoxysiloxanes.

4. Composition according to at least one of Claims 1 to 3, **characterized in that** the organosilicon compounds are obtained by reacting at least one compound selected from the group of alkoxysilanes and at least one compound selected from the group of alkoxysiloxanes.

5. Composition according to Claim 4, **characterized in that** the reaction is carried out at a temperature of 150 to 200°C.

6. Composition according to any of Claims 1 to 5, **characterized in that** the composition is concrete or an artificial stone.

7. Process for the preparation of a hardened cement-containing composition by adding an aqueous emulsion comprising organosilicon compounds, based on at least one compound selected from the group of alkoxysilanes and at least one compound selected from the group of alkoxysiloxanes, to a cement-containing flowable mixture and finally hardening the mixture, **characterized in that** emulsion is added to the mixture in such an amount that the proportion of organosilicon compounds in the cement-containing composition is from 0.3 to 1% by weight, based on the proportion of cement, **characterized in that** the organosilicon compounds are based on

c) 5 to 95% by weight of alkoxysilanes of the general formula (**I**)

$$R^1\text{-Si-}(OR^2)_3 \qquad (\mathbf{I})$$

wherein

$R^1$ is an alkyl radical having 1 to 16 carbon atoms and
$R^2$ is an alkyl radical having 1 to 4 carbon atoms,

and
d) 95 to 5% by weight of a mixture consisting of

d1) a silane of the general formula (**III**)

$$R^6\text{-Si-}(OR^5)_3 \qquad (\mathbf{III})$$

wherein

$R^5$ is an alkyl radical having 1 to 4 carbon atoms, and
$R^6$ is an aminoalkyl radical having 1 to 6 carbon atoms,

a radical of the general formula (**IV**)

$$H_2N\text{-}(CH_2)_xR^7\text{-}(CH_2)_y\text{-} \qquad (\mathbf{IV}),$$

in which

$R^7$ is an -O-, -S-, -NH- or $-NH-CH_2-CH_2-NH-$ radical,

x is greater than or equal to 2 and
y is greater than or equal to 2, or a radical of the general formula (**V**)

$$(R^8O)_3Si\text{-}(CH_2)_z\text{-}NH\text{-}(CH_2)_z\text{-} \qquad (\mathbf{V}),$$

in which

$R^8$ is an alkyl radical having 1 to 4 carbon atoms and
z is greater than or equal to 2,

and

d2) a polysiloxane of the general formula (**VIII**)

$$HO\text{-}[Si(R^9)_2O]_m\text{-}H \qquad (\mathbf{VIII}),$$

wherein
$R^9$ is the same or different and is a methyl or phenyl radical, but at least 90% of the $R^9$ radicals are methyl radicals and m = 20 to 250, and wherein the ratio of d1) to d2) is maintained such that one SiOH group of the compound d2) corresponds to > 1 to 3 $OR^5$ groups of the compound d1).

**8.** Process according to Claim 7, **characterized in that** up to 50% by weight of component d) is replaced by equal amounts of a siloxane of the formula

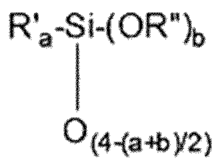

where R' = alkyl radical having 1 to 8 carbon atoms or a phenyl radical, R" = an alkyl radical having 1 to 4 carbon atoms, a = 0.8 to 1.2 and b = 0.2 to 1.2.

**9.** Process according to Claim 7 or 8, **characterized in that** the emulsion added to the mixture has a proportion of organosilicon compounds of 1 to 75% by weight, based on the emulsion.

**10.** Process according to at least one of Claims 7 to 9, **characterized in that** more than 2% by weight of aqueous emulsion is added to the mixture.

**11.** Process according to at least one of Claims 7 to 10, **characterized in that** an emulsion is employed comprising 1 to 10% by mass of one or more emulsifiers selected from anionic, cationic, nonionogenic emulsifiers or mixtures.

**12.** Process according to at least one of Claims 7 to 11, **characterized in that** the organosilicon compounds are obtained by reacting at least one compound selected from the group of alkoxysilanes and at least one compound selected from the group of alkoxysiloxanes.

**13.** Process according to Claim 12, **characterized in that** the reaction is carried out at a temperature of 150 to 200°C.

**14.** Use of a composition according to any of Claims 1 to 6 for producing structures, particularly roofs, floors or walls of structures.

**15.** Structures or parts thereof which comprise a composition according to any of Claims 1 to 6 or consist thereof.

## Revendications

**1.** Composition contenant du ciment, **caractérisée en ce que** la composition présente une proportion en composés d’organosilicium de 0,3 à 1 % en poids par rapport à la proportion de ciment, les composés d’organosilicium étant

à base d'au moins un composé d'organosilicium choisi dans le groupe des alcoxysilanes et d'au moins un composé d'organosilicium choisi dans le groupe des alcoxysiloxanes,
**caractérisée en ce que** parmi les composés d'organosilicium,

c) 5 à 95 % en poids sont à base d'alcoxysilanes de formule générale (I)

$$R^1\text{-Si-}(OR^2)_3 \qquad \textbf{(I)}$$

$R^1$ étant un radical alkyle comportant 1 à 16 atome(s) de carbone et
$R^2$ étant un radical alkyle comportant 1 à 4 atome(s) de carbone,

et
d) 95 à 5 % en poids sont à base d'un mélange, constitué par

d1) un silane de formule générale (III)

$$R^6\text{-Si-}(OR^5)_3 \qquad \textbf{(III)}$$

$R^5$ étant un radical alkyle comportant 1 à 4 atome(s) de carbone,
$R^6$ étant un radical aminoalkyle comportant 1 à 6 atome(s) de carbone,

un radical de formule générale (IV)

$$H_2N\text{-}(CH_2)_xR^7\text{-}(CH_2)_y\text{-} \qquad \textbf{(IV)},$$

dans laquelle

$R^7$ signifie un radical -O-, -S-, -NH- ou $-NH-CH_2-CH_2-NH-$,
x est supérieur ou égal à 2 et
y est supérieur ou égal à 2, ou un radical de formule générale (V)

$$\{R^aO)_3Si\text{-}(CH_2)_z\text{-NH-}(CH2)\ _z\text{-} \qquad \textbf{(V)},$$

dans laquelle,

$R^8$ signifie un radical alkyle comportant 1 à 4 atome(s) de carbone et
z est supérieur ou égal à 2,

et

d2) un polysiloxane de formule générale (VIII)

$$HO\text{-}[Si(R^9)_2O]_m\text{-}H \qquad (VIII),$$

$R^9$, identiques ou différents, étant un radical méthyle ou phényle, mais au moins 90 % des radicaux $R^9$ étant des radicaux méthyle et m = 20 à 250, et le rapport de d1) à d2) étant tel qu'à un groupe SiOH du composé d2) correspondent > 1 à 3 groupes $OR^5$ du composé d1).

2. Composition selon la revendication 1, **caractérisée en ce que** jusqu'à 50 % en poids du composant d sont remplacés par des quantités identiques d'un siloxane de formule

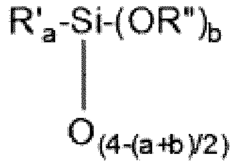

avec R' = radical alkyle comportant 1 à 8 atome(s) de carbone ou un radical phényle, R" = un radical alkyle comportant 1 à 4 atome(s) de carbone, a = 0,8 à 1,2 et b = 0,2 à 1,2.

**3.** Composition selon au moins l'une des revendications 1 et 2, **caractérisée en ce que** les composés d'organosilicium sont au moins un composé choisi dans le groupe des alcoxysilanes et au moins un composé choisi dans le groupe des alcoxysiloxanes.

**4.** Composition selon au moins l'une des revendications 1 à 3, **caractérisée en ce que** les composés d'organosilicium sont obtenus par transformation d'au moins un composé choisi dans le groupe des alcoxysilanes et d'au moins un composé choisi dans le groupe des alcoxysiloxanes.

**5.** Composition selon la revendication 4, **caractérisée en ce que** la transformation est mise en œuvre à une température de 150 à 200 °C.

**6.** Composition selon l'une quelconque des revendications 1 à 5, **caractérisée en ce que** la composition est du béton ou une pierre artificielle.

**7.** Procédé pour la préparation d'une composition durcie contenant du ciment, par ajout d'une émulsion aqueuse qui présente des composés d'organosilicium, qui sont à base d'au moins un composé choisi dans le groupe des alcoxysilanes et d'au moins un composé choisi dans le groupe des alcoxysiloxanes, à un mélange fluide, contenant du ciment et durcissement final du mélange, **caractérisé en ce qu'**autant d'émulsion est ajoutée au mélange pour que la proportion des composés d'organosilicium dans la composition contenant du ciment soit de 0,3 à 1 % en poids par rapport à la proportion de ciment, **caractérisé en ce que** les composés d'organosilicium sont à base de

c) 5 à 95 % en poids d'alcoxysilanes de formule générale (I)

$$R^1\text{-Si-}(OR^2)_3 \qquad \textbf{(I)}$$

$R^1$ étant un radical alkyle comportant 1 à 16 atome(s) de carbone et
$R^2$ étant un radical alkyle comportant 1 à 4 atome(s) de carbone,

et
d) 95 à 5 % en poids d'un mélange, constitué par

d1) un silane de formule générale (III)

$$R^6\text{-Si-}(OR^5)_3 \qquad \textbf{(III)}$$

$R^5$ étant un radical alkyle comportant 1 à 4 atome(s) de carbone, et
$R^6$ étant un radical aminoalkyle comportant 1 à 6 atome(s) de carbone,

un radical de formule générale (IV)

$$H_2N\text{-}(CH_2)_xR^7\text{-}(CH_2)_y\text{-} \qquad \textbf{(IV)},$$

dans laquelle

$R^7$ signifie un radical -O-, -S-, -NH- ou $-NH-CH_2-CH_2-NH-$,
x est supérieur ou égal à 2 et

y est supérieur ou égal à 2, ou un radical de formule générale (V)

$(R^8O)_3Si-(CH_2)_z-NH-(CH2)_z-$ (**V**),

dans laquelle,

$R^8$ signifie un radical alkyle comportant 1 à 4 atome(s) de carbone et
z est supérieur ou égal à 2,

et

d2) un polysiloxane de formule générale (VIII)

$HO-[Si(R^9)_2O]_m-H$ (VIII),

$R^9$, identiques ou différents, étant un radical méthyle ou phényle, mais au moins 90 % des radicaux $R^9$ étant des radicaux méthyle et m = 20 à 250, et le rapport de d1) à d2) étant tel qu'à un groupe SiOH du composé d2) correspondent > 1 à 3 groupes $OR^5$ du composé d1).

**8.** Procédé selon la revendication 7, **caractérisé en ce que** jusqu'à 50 % en poids du composant d) sont remplacés par des quantités identiques d'un siloxane de formule

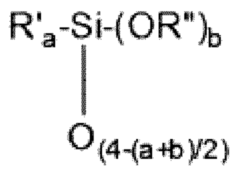

avec R' = radical alkyle comportant 1 à 8 atome(s) de carbone ou un radical phényle, R" = un radical alkyle comportant 1 à 4 atome(s) de carbone, a = 0,8 à 1,2 et b = 0,2 à 1,2.

**9.** Procédé selon la revendication 7 ou 8, **caractérisé en ce que** l'émulsion ajoutée au mélange présente une proportion de composés d'organosilicium dans l'émulsion de 1 à 75 % en poids.

**10.** Procédé selon au moins l'une des revendications 7 à 9, **caractérisé en ce que** plus de 2 % en poids d'émulsion aqueuse sont ajoutés au mélange.

**11.** Procédé selon au moins l'une des revendications 7 à 10, **caractérisé en ce qu'**une émulsion est utilisée, qui présente 1 à 10 % en masse d'un ou plusieurs émulsifiants choisis parmi des émulsifiants anioniques, cationiques, non ionogènes ou des mélanges.

**12.** Procédé selon au moins l'une des revendications 7 à 11, **caractérisé en ce que** les composés d'organosilicium sont obtenus par transformation d'au moins un composé choisi dans le groupe des alcoxysilanes et d'au moins un composé choisi dans le groupe des alcoxysiloxanes.

**13.** Procédé selon la revendication 12, **caractérisé en ce que** la transformation est mise en œuvre à une température de 150 à 200 °C.

**14.** Utilisation d'une composition selon l'une quelconque des revendications 1 à 6 pour la construction de bâtiments, en particulier de toits, de sols ou de murs de bâtiments.

**15.** Bâtiments ou parties de ceux-ci qui contiennent ou qui sont constitué(e)s d'une composition selon l'une quelconque des revendications 1 à 6.

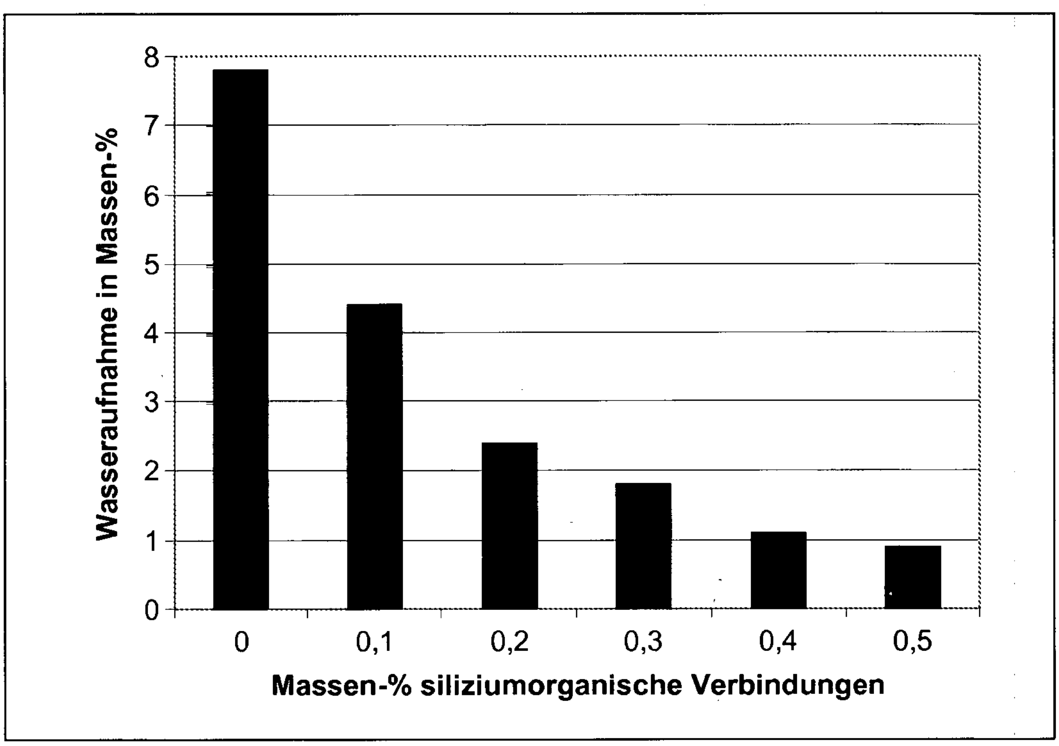
8
7
6
5
4
3
2
1
0
Wasseraufnahme in Massen-%
0
0,1
0,2
0,3
0,4
0,5
Massen-% siliziumorganische Verbindungen

Fig. 1

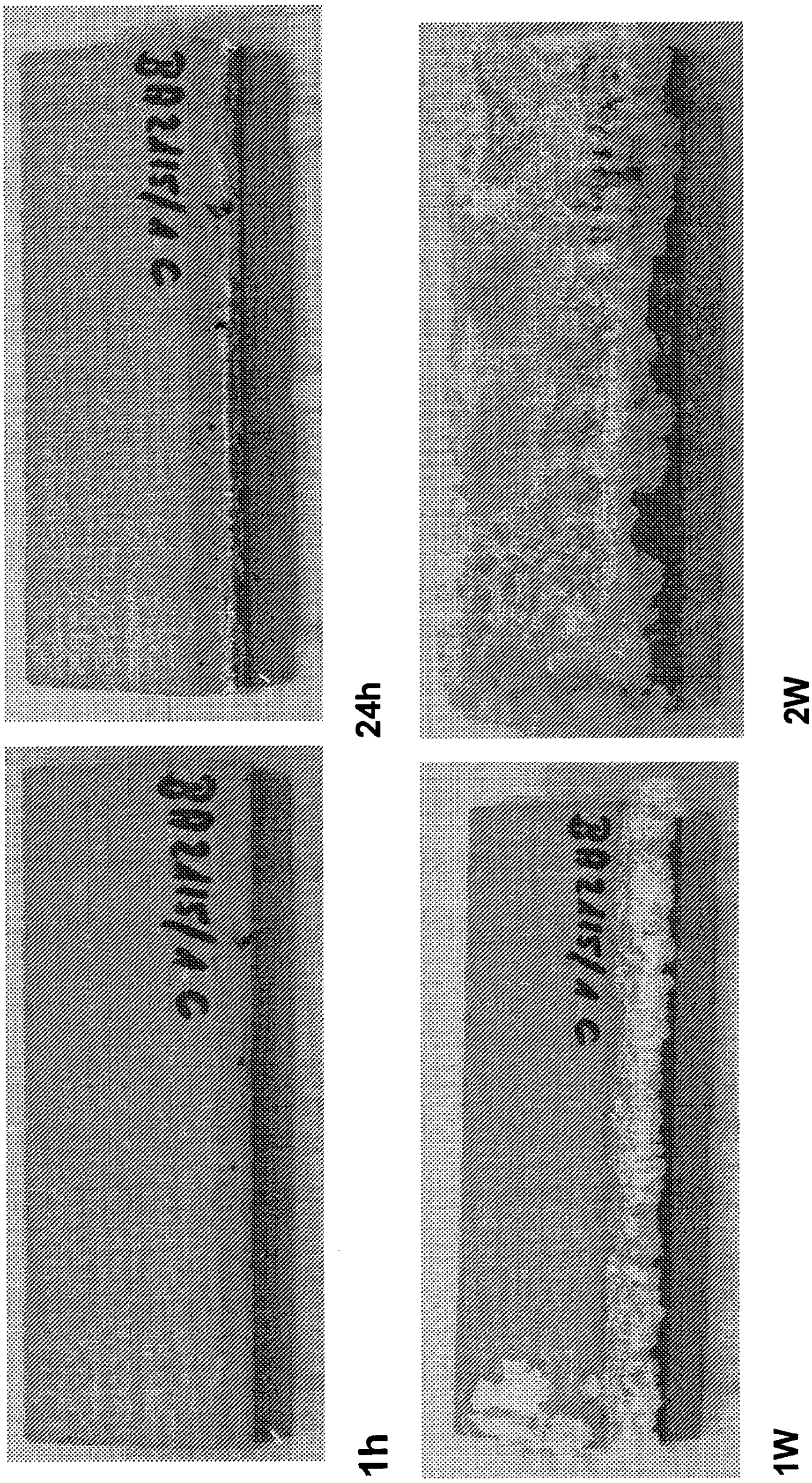


Fig. 2

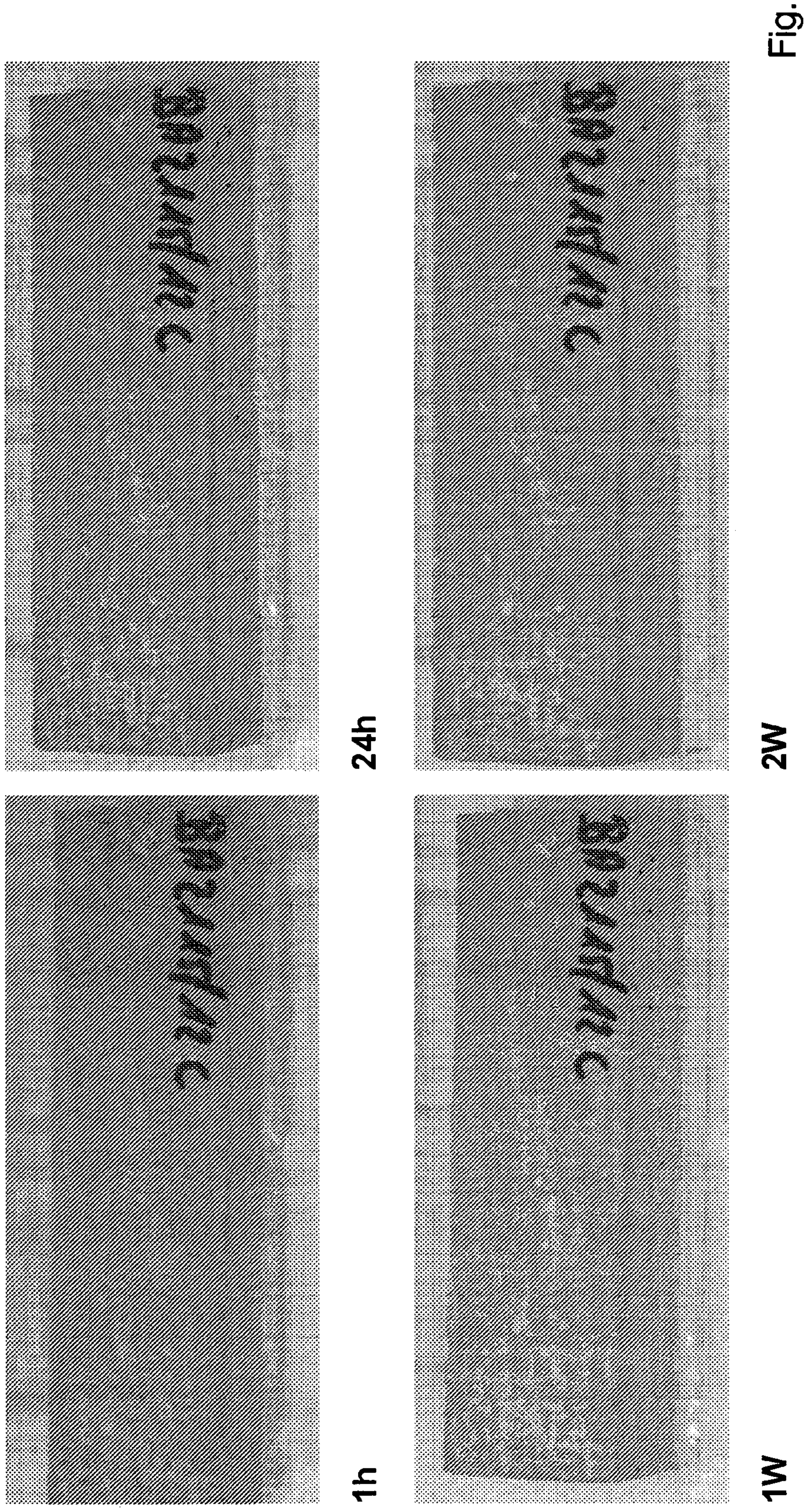


Fig. 3

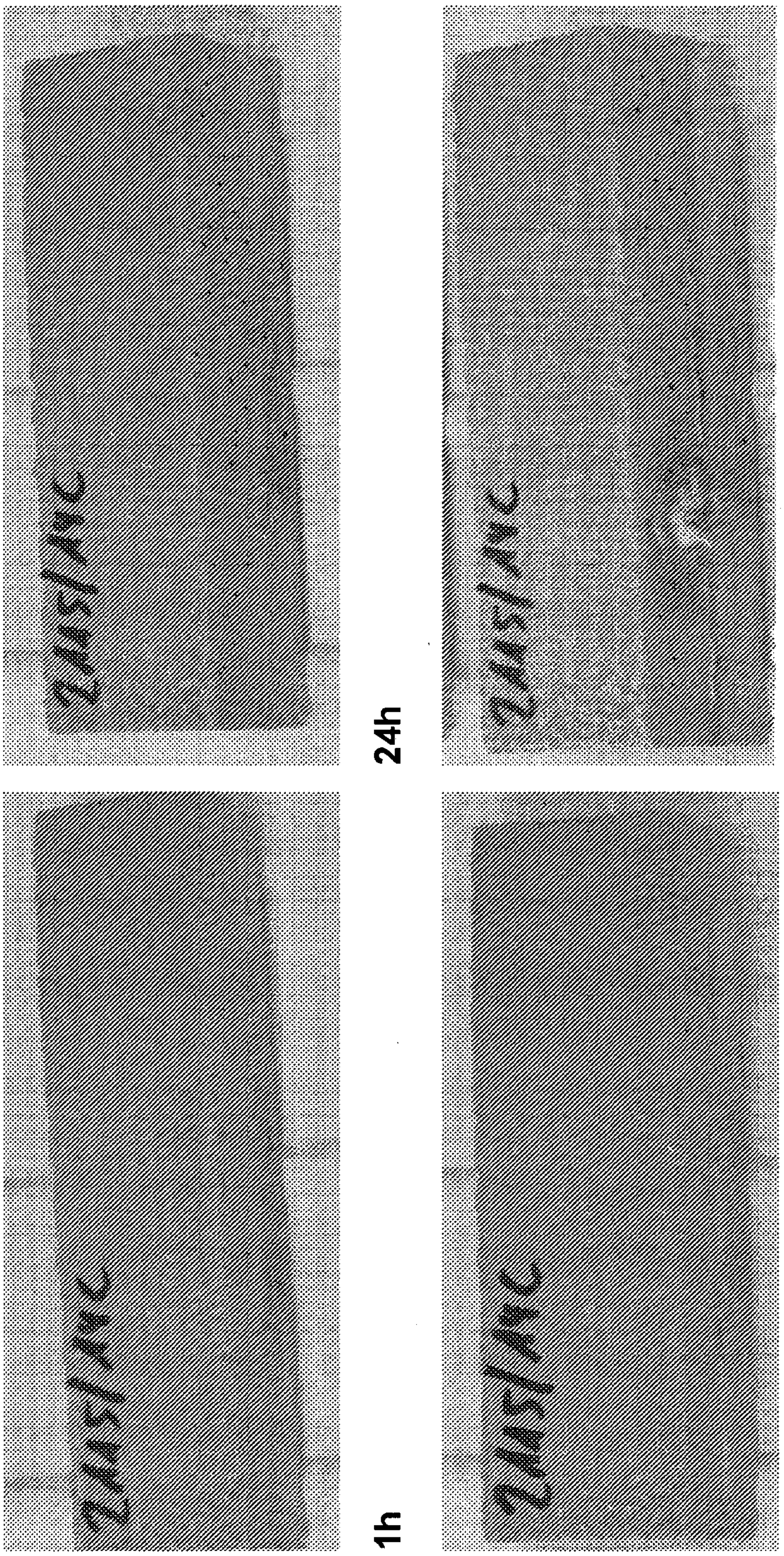

24h

1h

2W

1W

Fig. 4

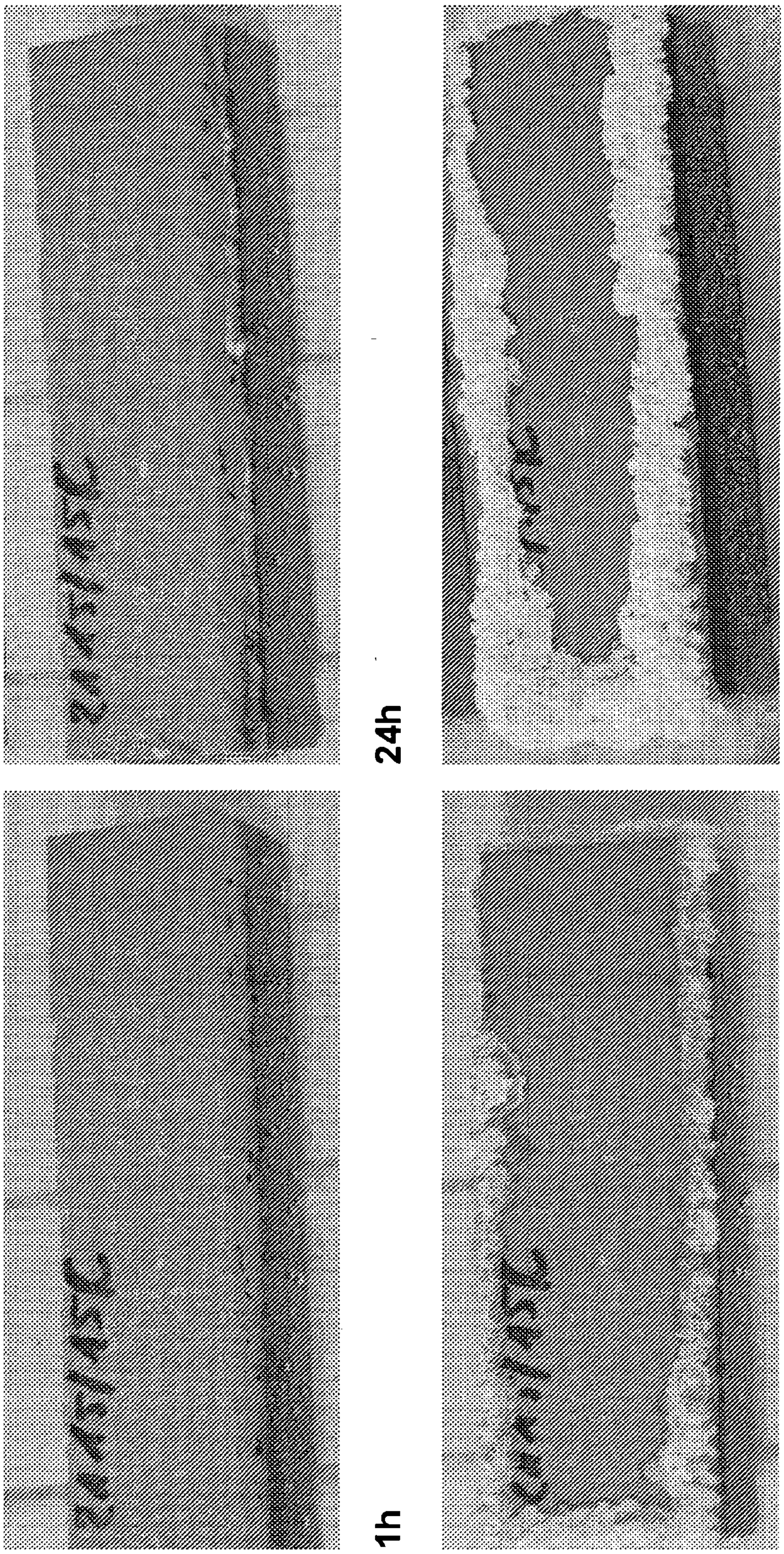


Fig. 5

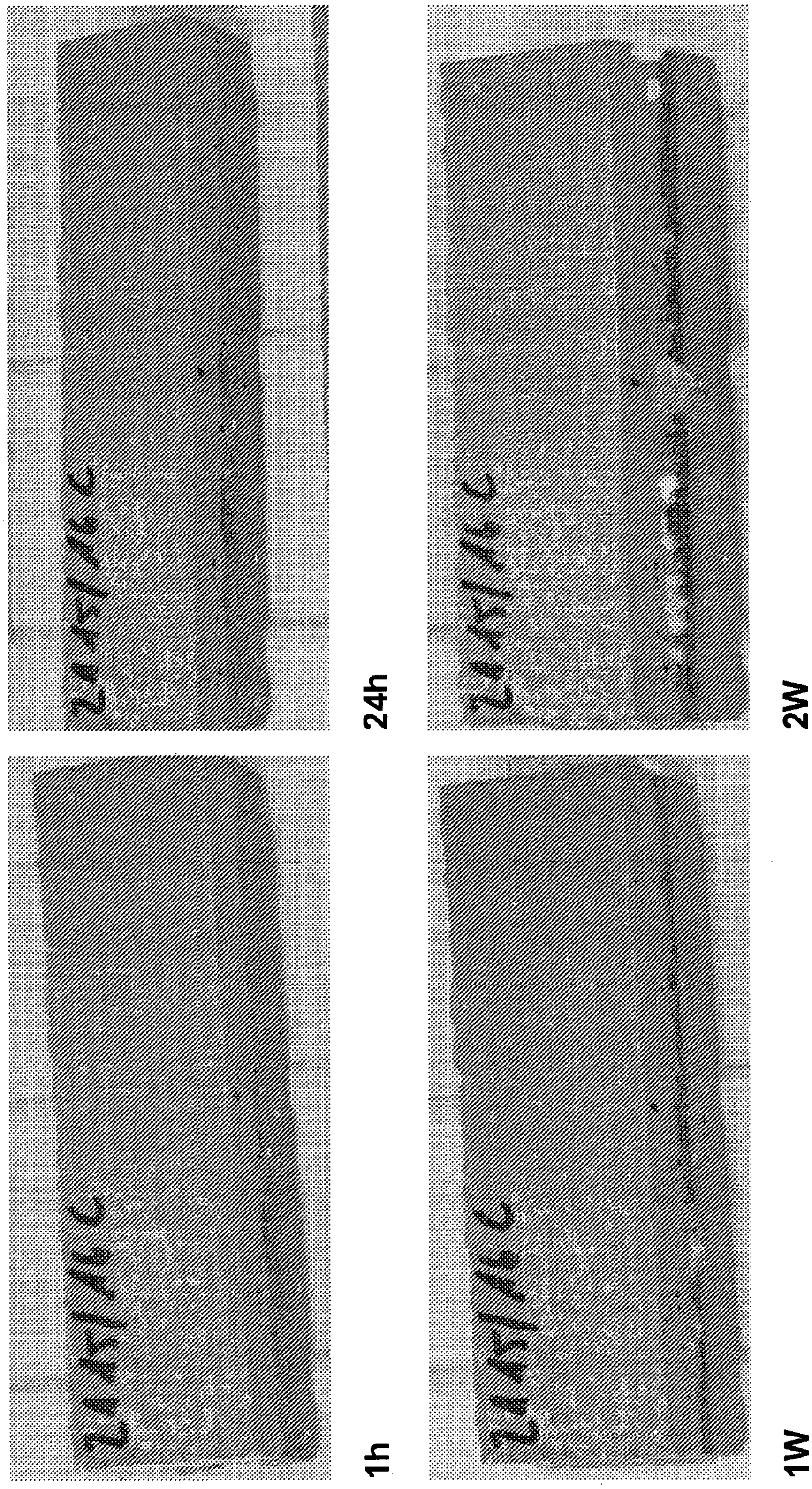


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02090287 A
- EP 0476452 A2
- US 6294608 B1